# EUROPÄISCHE PATENTSCHRIFT

(11) **EP 4 230 377 B1**
(45) Veröffentlichungstag und Bekanntmachung des Hinweises auf die Patenterteilung: **30.04.2025**
(21) Anmeldenummer: 22215569.9
(22) Anmeldetag: 21.12.2022
(51) Int. Cl.: B29C 45/00, B05B 1/34, B23K 26/36, B23K 26/382, B29C 64/188, B33Y 40/20, B33Y 80/00

(54) **DÜSENKÖRPER**
NOZZLE BODY
CORPS DE BUSE

(30) Priorität: 26.01.2022 DE 102022101749
(43) Veröffentlichungstag der Anmeldung: 23.08.2023
(73) Patentinhaber: Aero Pump GmbH, 65239 Hochheim/Main (DE)
(72) Erfinder: Rother, Sebastian, 55116 Mainz (DE); Marszalek, Milena Angelika, 55139 Mainz (DE)
(74) Vertreter: Keil & Schaafhausen Patentanwälte PartGmbB

(56) Entgegenhaltungen:
- WO-A1-2010/076012
- WO-A1-2016/075433
- WO-A1-97/13584
- US-A- 4 074 861
- US-A1- 2006 103 051
- US-A1- 2011 303 767
- US-A1- 2017 297 042
- US-A1- 2020 139 385

## Beschreibung

Die vorliegende Erfindung betrifft ein Verfahren zur Herstellung eines Düsenkörpers aus einem Düsenkörperrohling, der mittels Spritzgusses oder einem 3D-Druckverfahren hergestellt wird.

Im Spritzgussverfahren wird Kunststoff in eine Form gepresst, so dass durch das Spritzgussverfahren eine Reihe verschiedener Geometrien herstellbar sind., die einigen Limitierungen unterliegen. So sind beispielsweise lochförmige Geometrien in ihrem Durchmesser nach unten begrenzt. Weiterhin sind beispielsweise Hinterschnitte im Rahmen des Spritzgussverfahrens nur begrenzt realisierbar.

WO 2010/076012 A1, US 4 074 861 A, WO 2016/075433 A1, US 2006/103051 A1, US 2020/139385 A1, WO 97/13584 A1, US 2011/303767 A1 und US 2017/297042 A1 beschreiben Düsenkörper und deren Herstellung.

Ein 3D-Druckverfahren ist ein additives Fertigungsverfahren, bei dem Material schichtweise aufgetragen wird, sodass ein drei-dimensionales Gebilde entsteht. Dabei unterliegt das 3D-Druckverfahren einigen Limitierungen, sodass die Gestaltungsfreiheit begrenzt ist.

Daher ist das Ziel der vorliegenden Erfindung ein Verfahren zur Herstellung eines Düsenkörpers vorzuschlagen, bei dem eine große Gestaltungsfreiheit des Düsenkörpers vorliegt.

Dieses Ziel wird durch die Merkmale des Anspruchs 1 gelöst. Vorteilhafte Ausgestaltungen ergeben sich aus den Unteransprüchen.

Der Düsenkörperrohling wird anschließend an das Spritzgießen oder 3D-Druckverfahren wenigstens teilweise durch eine Laserbearbeitung zum Düsenkörper bearbeitet. Durch die Laserbearbeitung kann der zuvor durch das Spritzgussverfahren oder 3D-Druckverfahren hergestellte Rohling entsprechend definierter Vorgaben bearbeitet werden, so dass eine große Gestaltungsfreiheit des Düsenkörpers erreicht wird. Dabei können beispielsweise erste Düsengeometrien beispielsweise durch das Spritzgussverfahren oder 3D-Druckverfahren erzeugt werden und anschließend zweite Düsengeometrien durch die Laserbearbeitung erzeugt werden.

Vorzugsweise wird durch die Laserbearbeitung wenigstens eine Düsengeometrie hergestellt. Unter einer Düsengeometrie wird unter anderem eine Fläche, eine Aussparung, ein Hinterschnitt oder dergleichen verstanden. Durch die Düsengeometrie wird Flüssigkeit in einen Flüssigkeitsnebel, auch Aerosole genannt, überführt, wobei die Flüssigkeit als Flüssigkeitsnebel aus dem Düsenkörper ausgestoßen wird. Damit trägt die Laserbearbeitung zu einer Düsengeometrie bei, die zu einer guten Überführung der Flüssigkeit in den Flüssigkeitsnebel führt.

Vorzugsweise wird durch die Laserbearbeitung wenigstens eine Düsenbohrung hergestellt. Durch die Laserbearbeitung kann die Düsenbohrung beispielsweise unterschiedliche Querschnitte und Querschnittsgeometrien aufweisen, so dass hier auf unterschiedliche Eigenschaften unterschiedlicher Flüssigkeiten Rücksicht genommen werden kann. Dadurch wird eine gute Gestaltungsfreiheit des Düsenkörpers erreicht.

Vorzugsweise wird durch die Laserbearbeitung die Düsenbohrung mit einem Durchmesser kleiner 300µm hergestellt. Der Begriff "kleiner" (<) soll als "kleiner gleich" verstanden (≤) werden. Dabei lässt sich grob sagen, dass ein kleinerer Durchmesser zu einem feineren Flüssigkeitsnebel führt. Dabei ist der Durchmesser der Düsenbohrung im Wesentlichen durch einen Fokuspunkt im Durchmesser des Lasers der Laserbearbeitung begrenzt. Kleinere Durchmesser, wie beispielswese 250µm, 200µm, 150µm oder 100µm oder Durchmesser zwischen diesen Werten sind ebenfalls möglich. Dadurch ist eine große Gestaltungsfreiheit des Durchmessers mit diesen Bohrungen möglich.

Vorzugsweise weist die Laserbearbeitung Methoden der Laserablation, des Laserbohrens, und/oder der 3D-Laserablation auf. Unter der Laserablation wird das Abtragen von Material von einer Oberfläche durch den Beschuss mittels eines gepulsten Lasers bezeichnet. Dabei führt der Laser beziehungsweise die Laserstrahlung zu einer rapiden Erhitzung und folglich der Ausbildung eines Plasmas an der Oberfläche des Werkstückes. Laserbohren ist ebenfalls ein nicht spanendes Bearbeitungsverfahren, bei dem mittels Laserstrahlung so viel Energie in das Werkstück eingebracht wird, dass der Werkstoff aufgeschmolzen und teilweise verdampft wird. Die 3D-Laserablation ist eine Sonderkonstellation der Laserablation, bei dem Material in drei Dimensionen bearbeitet wird. Weiterhin ist beispielsweise eine Kombination der genannten Methoden möglich. Dies führt zu einer großen Gestaltungsfreiheit und großen Flexibilität.

Vorzugsweise weist der Düsenkörper eine Hohlkegelgeometrie auf. Bei einer Hohlkegeldüse wird die zu zerstäubende Flüssigkeit in eine Rotationsbewegung versetzt. Dies führt zu einem feinen Flüssigkeitsnebel.

Weiterhin wird die Aufgabe dadurch gelöst, dass der Düsenkörperrohling wenigstens teilweise durch eine Laserbearbeitung zum Düsenkörper bearbeitet ist. Folglich wird der Düsenkörperrohling durch die wenigstens teilweise Laserbearbeitung zu einem Düsenkörper hin überführt. Durch die Laserbearbeitung sind verschiedenste Geometrien herstellbar, wie beispielsweise Hinterschnitte, Aussparungen, Ausnehmungen, flächige Bearbeitungen, oder dergleichen. Neben der Laserbearbeitung können Düsengeometrien beispielsweise durch das Spritzgussverfahren oder 3D-Druckverfahren realisiert werden. Dadurch wird eine große Gestaltungsfreiheit erreicht.

Vorzugsweise weist die Laserbearbeitung Methoden der Laserablation, des Laserbohrens und/oder der 3D-Laserablation auf. Bei der Laserablation wird Material von einer Oberfläche durch Beschuss mit einem gepulsten Laserstrahl beziehungsweise einer gepulsten Laserstrahlung abgetragen. Bei dem Laserbohren wird mittels Laserstrahlung lokal so viel Energie in das Werkstück eingebracht, so dass der Werkstoff aufgeschmolzen und teilweise verdampft wird. Dabei ist ein Aufschmelzen des Materials am Rand der Bohrung nicht erwünscht. Ebenfalls ist beispielsweise eine Kombination der genannten Methoden durchführbar. Dadurch wird eine gute Gestaltungsfreiheit der Düse beziehungsweise des Düsenkörpers erreicht.

Vorzugsweise wird durch die Laserbearbeitung wenigstens eine Düsenbohrung hergestellt. Im weitesten Sinne weist jeder Düsenkörper eine Öffnung auf, durch die Flüssigkeit nach außen tritt. Durch die Laserbearbeitung können unterschiedliche Geometrien der Düsenbohrung, wie beispielsweise unterschiedliche Querschnittsgeometrien oder dergleichen hergestellt werden. Dadurch kann auf verschiedene Eigenschaften, wie beispielsweise der Dichte und/oder der Viskosität Rücksicht genommen werden. Dadurch kann der Düsenkörper an unterschiedliche Flüssigkeiten einfach angepasst werden.

Vorzugsweise wird durch die Laserbearbeitung die Düsenbohrung mit einem Durchmesser kleiner 300µm hergestellt. Dabei wird ein minimaler Durchmesser beispielsweise durch einen Fokuspunkt des Lasers in der Laserbearbeitung bestimmt, so dass jeder Durchmesser, der zwischen den Abmessungen des Fokuspunktes und 300µm liegt, hergestellt werden. Dies ermöglicht eine große Gestaltungsfreiheit.

Vorzugsweise weist der Düsenkörper eine Hohlkegeldüsengeometrie auf. Bei einer Hohlkegeldüsengeometrie wird Flüssigkeit zunächst in Rotationsbewegungen versetzt, bevor die Flüssigkeit aus dem Düsenkörper durch die Düsenbohrung nach außen tritt. Dadurch wird ein feiner Flüssigkeitsnebel erreicht. Dabei kann die Hohlkegeldüsengeometrie durch die Laserbearbeitung an Eigenschaften der zu zerstäubenden Flüssigkeit angepasst werden.

Dies ermöglicht eine flexible Nutzung des Düsenkörperrohlings, so dass aus einem Düsenkörperrohling verschiedene Düsenkörper mit unterschiedlichen Geometrien hergestellt werden können. Dadurch wird eine gute Gestaltungsfreiheit erreicht.

Weiterhin kann der Düsenkörper ein Material mit mindestens einer Hauptkomponente aus der Gruppe PMMA (Polymethylmethacrylat), POM (Polyoxymethylen), PP (Polypropylen), PE (Polyethylen), ABS (Acrylnitril-Butadien-Styrol-Copolymer), COC (Cycloolefin-Copolymer), PA (Polyamid), PC (Polycarbonat), PBT (Polybutylenterephthalat), PEEK (Polyetheretherketon), PEI (Polyetherimid), PET (Polyethylenterephthalat) und PPE (Polyphenylenether), aufweisen. Diese Materialien gehörten zu den thermoplastischen Kunststoffen und lassen lässt sich einfach durch Spritzgussverfahren oder 3D-Druckverfahren alleine oder in Kombination verarbeiten. Als Kombination ist beispielsweise eine Mischung von PE und PP zu nennen.

Die Erfindung wird im Folgenden anhand eines bevorzugten Ausführungsbeispiels in Verbindung mit der Zeichnung beschrieben. Hierin zeigen:
- Fig. 1: eine schematische Darstellung eines Düsenkörperrohlings,
- Fig. 2: eine schematische Draufsicht eines Düsenkörperrohlings,
- Fig. 3: eine schematische Schnittdarstellung eines Düsenkörperrohlings,
- Fig. 4: eine schematische Schnittdarstellung eines Düsenkörpers, und
- Fig. 5: eine vergrößerte Ansicht einer Düsenbohrung eines Düsenkörpers.

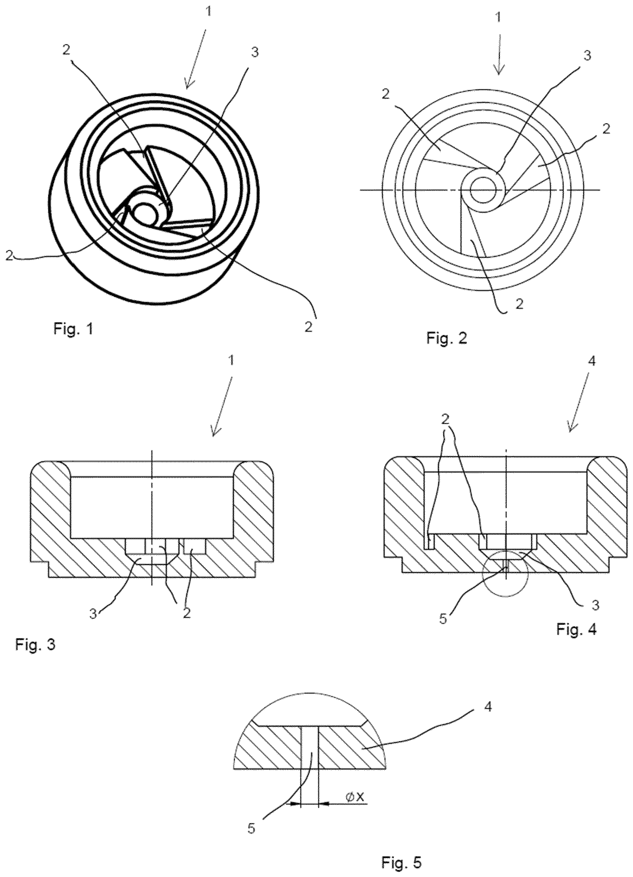

Fig. 1 zeigt einen Düsenkörperrohling 1, der durch ein Spritzgussverfahren oder 3D-Druckverfahren hergestellt wurde. Dass der so hergestellte Düsenkörperrohling 1 bereits einige Düsengeometrien, wie drei Wirbelkanäle 2 und einen kegelstumpfförmigen Abschnitt 3 aufweist, ist nicht Teil der Erfindung. Jedoch weist der Düsenkörperrohling 1 noch keine Düsenbohrung auf.

Fig. 2 zeigt den Düsenkörperrohling 1 schematisch in einer Draufsicht. Dabei ist zu erkennen, dass die Düsenbohrung noch nicht hergestellt wurde. Jedoch sind in Fig. 2 die Wirbelkanäle 2 und der kegelstumpfförmige Abschnitt 3 dargestellt, deren Herstellung durch ein Spritzgussverfahren oder 3D-Druckverfahren nicht Teil der Erfindung sind.

Fig. 3 zeigt eine schematische Schnittdarstellung des Düsenkörperrohlings 1, bei dem bereits die Wirbelkanäle 2 und der kegelstumpfförmige Abschnitt 3 hergestellt wurden, wobei deren Herstellung durch ein Spritzgussverfahren oder 3D-Druckverfahren nicht Teil der Erfindung sind.

Dabei wurden die Düsengeometrien, soweit diese durch das Spritzgussverfahren oder 3D-Druckverfahren hergestellt werden können, bereits hergestellt. Im Wesentlichen können Geometrien, die Abmessungen > 300µm aufweisen durch ein Spritzgussverfahren oder 3D-Druckverfahren hergestellt werden.

Erfindungsgemäß werden die in Fig. 3 dargestellten Geometrien kegelstumpfförmiger Abschnitt 3 und Wirbelkanäle 2 im Gegensatz zum oben beschriebenen Spritzgussverfahren oder 3D-Druckverfahren jedoch im der Rahmen Laserbearbeitung des Düsenkörperrohlings 1 erstellt. Dabei wird der Düsenkörperrohling 1 ohne einen kegelstumpfförmigen Abschnitt 3, Wirbelkanäle 2, oder eine Düsenbohrung 5 durch ein Spritzgussverfahren oder 3D-Druckverfahren hergestellt, wobei der kegelstumpfförmige Abschnitt 3, die Wirbelkanäle 2 und die Düsenbohrung 5 durch Laserbearbeitungsverfahren erzeugt werden.

Die Anzahl der in Fig. 3 gezeigten Wirbelkanäle 2 variiert und kann von der dargestellten Anzahl abweichen.

Fig. 4 zeigt einen schematisch dargestellten Düsenkörper 4 in einer Schnittansicht. Der Düsenkörper 4 weist wie der Düsenkörperrohling 1 ebenfalls Wirbelkanäle 2 und einen kegelstumpfförmigen Abschnitt 3 auf. Weiterhin weist der Düsenkörper 4 eine Düsenbohrung 5 auf, die durch eine Laserbearbeitung hergestellt wurde.

Die Düsenbohrung 5 ist einer Detailansicht in Fig. 5 schematisch dargestellt. Dabei weist die Düsenbohrung 5 einen Durchmesser X auf, der im vorliegenden Fall kleiner 300µm, insbesondre 250µm, 200µm, 150µm oder 100µm oder Durchmesser zwischen diesen Werten, ist. Der bevorzugte Durchmesser der Düsenbohrung 5 ist dabei kleiner als 100µm. Die Düsenbohrung 5 ist dabei in dem Düsenkörper 4 angeordnet. Der Begriff "kleiner" (<) soll als "kleiner gleich" (≤) verstanden werden.

Eine Hauptkomponente des Düsenkörpers 4 beziehungsweise des Düsenkörperrohlings 1 ist dabei Kunststoff. Durch den Kunststoff sind Laserbearbeitungen möglich, bei denen zunächst ein Laserstrahl in das Werkstück eindringt und an einer gegenüber zur Eindringstelle liegenden Oberfläche das Werkstück bearbeitet. Weiterhin kann im Rahmen der Laserbearbeitung eine Laserablation, ein Laserbohren und/oder eine 3D-Laserablation Anwendung finden. Weiterhin kann eine Kombination der genannten Methoden durchgeführt werden.

Die Hauptkomponente des Düsenkörperrohlings 1 wird entsprechend anzuwendender Laserbearbeitungsverfahren ausgewählt, wobei hier beispielsweise die Transparenzeigenschaften des Kunststoffes berücksichtigt werden. So wird im Rahmen der Bearbeitung durch die oben beschriebene Laserablation transparenter Kunststoff als Hauptkomponente des Düsenkörperrohlings 1 eingesetzt. Für andere Laserbearbeitungsverfahren können auch nicht transparente Kunststoffe eingesetzt werden. Als Hauptkomponente kann der Düsenkörper wenigstens eins der folgenden Materialien aufweisen: PMMA (Polymethylmethacrylat), POM (Polyoxymethylen), PP (Polypropylen), PE (Polyethylen), ABS (AcrylnitrilButadien-Styrol-Copolymer), COC (Cycloolefin-Copolymer), PA (Polyamid), PC (Polycarbonat), PBT (Polybutylenterephthalat), PEEK (Polyetheretherketon), PEI (Polyetherimid), PET (Polyethylenterephthalat) und PPE (Polyphenylenether). Auch kann eine Kombination der genannten Hauptkomponenten Verwendung finden, wie beispielsweise eine Mischung aus PE und PP.

Als Laserablation, auch Laserverdampfen genannt, wird das Abtragen von Material von einer Oberfläche durch Beschuss mit gepulster Laserstrahlung bezeichnet. Die hierbei Verwendung findende Laserstrahlung mit hoher Leistungsdichte führt zur rapiden Erhitzung und Ausbildung eines Plasmas an der Oberfläche.

Beim Laserbohren wird mittels Laserstrahlung lokal soviel Energie in das Werkstück eingebracht, dass der Werkstoff aufgeschmolzen und teilweise verdampft wird. Der ionisierte Dampf wird durch den unterschiedlichen Druck zwischen Umgebung und dem Ort der Bohrung weggeschleudert. Ein Aufschmelzen des Materials am Rande der Bohrung ist dabei nicht erwünscht.

Die 3D-Laserablation entspricht der bereits oben beschriebenen Laserablation, wobei durch die 3D-Laserablation das Werkstück im dreidimensionalen Raum bearbeitet wird. Dadurch kann beispielsweise ein Hinterschnitt oder andere Geometrien hergestellt werden.

### Bezugszeichenliste

- 1: Düsenkörperrohling
- 2: Wirbelkanäle
- 3: Kegelstumpfförmiger Abschnitt
- 4: Düsenkörper
- 5: Düsenbohrung

## Patentansprüche

1. Verfahren zur Herstellung eines Düsenkörpers (4) aus einem Düsenkörperrohling (1), der mittels Spritzgusses oder einem 3D-Druckverfahren hergestellt wird, wobei der Düsenkörperrohling (1) anschließend wenigstens teilweise durch eine Laserbearbeitung zum Düsenkörper (4) bearbeitet wird, **dadurch gekennzeichnet, dass** der Düsenkörper (3) einen kegelstumpfförmigen Abschnitt (3) und Wirbelkanäle (2) aufweist, wobei der kegelstumpfförmige Abschnitt (3) und die Wirbelkanäle (2) durch die Laserbearbeitung erzeugt werden.

2. Verfahren nach Anspruch 1, **dadurch gekennzeichnet, dass** durch die Laserbearbeitung wenigstens eine Düsengeometrie hergestellt wird.

3. Verfahren nach Anspruch 1 oder 2, **dadurch gekennzeichnet, dass** durch die Laserbearbeitung wenigstens eine Düsenbohrung (5) hergestellt wird.

4. Verfahren nach Anspruch 3, **dadurch gekennzeichnet, dass** durch die Laserbearbeitung die Düsenbohrung (5) mit einem Durchmesser (x) kleiner 300µm hergestellt wird.

5. Verfahren nach einem der Ansprüche 1 bis 4, **dadurch gekennzeichnet, dass** die Laserbearbeitung Methoden der Laserablation, des Laserbohren und/oder der 3D-Laserablation aufweist.

6. Verfahren nach einem der Ansprüche 1 bis 5, **dadurch gekennzeichnet, dass** der Düsenkörper (4) eine Hohlkegeldüsengeometrie aufweist.

## Claims

1. A method for producing a nozzle body (4) from a nozzle body blank (1) produced by injection molding or by a 3D printing process, wherein the nozzle body blank (1) is subsequently processed at least partially by laser processing to form the nozzle body (4), **characterized in that** the nozzle body (4) has a frusto-conical section (3) and turbulence channels (2), wherein the frusto-conical section (3) and the turbulence channels (2) are created by laser processing.

2. The method according to claim 1, wherein at least one nozzle geometry is produced by laser processing.

3. The method according to claim 1 or 2, wherein at least one nozzle bore (5) is produced produced by laser processing.

4. The method according to claim 3, wherein the nozzle bore (5) produced by laser processing has a diameter (x) of less than 300 µm.

5. The method according to of any one of claims 1 to 4, wherein the laser processing comprises laser ablation, laser drilling and/or 3D laser ablation methods.

6. The method according to any one of claims 1 to 5, wherein the nozzle body (4) comprises a hollow-cone nozzle geometry.

## Revendications

1. Procédé, destiné à fabriquer un corps de buse (4) à partir d'une ébauche (1) de corps de buse, que l'on fabrique par moulage par injection ou par un procédé d'impression en 3D, l'ébauche (1) de corps de buse étant usinée par la suite au moins partiellement par usinage au laser pour obtenir le corps de buse (4), **caractérisé en ce que** le corps de buse (3) comporte une portion (3) de forme tronconique et des canaux de tourbillonnement (2), la portion (3) de forme tronconique et les canaux de tourbillonnement (2) étant créés par l'usinage au laser.

2. Procédé selon la revendication 1, **caractérisé en ce qu'**au moins une géométrie de buse est fabriquée lors de l'usinage au laser.

3. Procédé selon la revendication 1 ou 2, **caractérisé en ce que** qu'au moins un perçage de buse (5) est fabriqué lors de l'usinage.

4. Procédé selon la revendication 3, **caractérisé en ce que** lors de l'usinage au laser, le perçage de buse (5) est fabriqué avec un diamètre (x) inférieur à 300 µm.

5. Procédé selon l'une quelconque des revendications 1 à 4, **caractérisé en ce que** l'usinage au laser comporte des méthodes de l'ablation au laser, du perçage au et / ou de l'ablation au laser en 3D.

6. Procédé selon l'une quelconque des revendications 1 à 5, **caractérisé en ce que** le corps de buse (4) présente une géométrie de buse en cône creux.
